# EUROPÄISCHE PATENTSCHRIFT

(11) **EP 4 402 549 B1**
(45) Veröffentlichungstag und Bekanntmachung des Hinweises auf die Patenterteilung: **03.09.2025**
(21) Anmeldenummer: 22755136.3
(22) Anmeldetag: 21.07.2022
(51) Int. Cl.: G05D 1/00, B60W 60/00, G01S 13/931, G01S 17/931, G01S 7/40, G01S 7/497, G01S 15/931, G01S 7/52, G01S 13/86, B60W 50/14

(54) **VERFAHREN ZUM BETREIBEN EINES FAHRZEUGS IN EINEM AUTOMATISIERTEN FAHRBETRIEB**
METHOD FOR OPERATING A VEHICLE IN AN AUTOMATED DRIVING MODE
PROCÉDÉ DE FONCTIONNEMENT D'UN VÉHICULE DANS UN MODE DE CONDUITE AUTOMATISÉE

(30) Priorität: 14.09.2021 DE 102021004646
(43) Veröffentlichungstag der Anmeldung: 24.07.2024
(73) Patentinhaber: Mercedes-Benz Group AG, 70372 Stuttgart (DE)
(72) Erfinder: KEMPE, Steffen, 89075 Ulm (DE); LAAROUSI, Rihab, 71116 Gärtringen (DE); WOLF, Daniela, 71069 Sindelfingen (DE)
(74) Vertreter: Novagraaf Group
(86) Internationale Anmeldenummer: PCT/EP2022/070559
(87) Internationale Veröffentlichungsnummer: WO 2023/041226

(56) Entgegenhaltungen:
- DE-A1- 102010 049 091
- DE-A1- 102017 003 741
- DE-A1- 102018 127 059
- DE-A1- 102019 130 037

## Beschreibung

Die Erfindung betrifft ein Verfahren zum Betreiben eines Fahrzeugs in einem automatisierten Fahrbetrieb.

Aus dem Stand der Technik ist, wie in der DE 199 34 670 A1 beschrieben, ein Objektdetektionssystem für ein Kraftfahrzeug bekannt. Es besteht aus einer Kombination von wenigstens drei Objektdetektoren, die jeweils einen anderen Detektionsbereich und/ oder eine andere Detektionsreichweite aufweisen.

In der DE 37 35 267 C3 wird eine Vorrichtung zur Sichtweitenmessung beschrieben. Sie umfasst Lichtemitter zur Erzeugung von Lichtimpulsen bzw. Lichtblitzen, einen Lichtsensor zur Registrierung des bei Aussendung der Lichtimpulse bzw. Lichtblitze von Streuzonen im Lichtweg zurückgestreuten Lichtes und eine Schaltung zur Auswertung der Ausgangssignale des Lichtsensors. Es ist die von Streuzonen außenseitig der Windschutzscheibe einer Fahrerkabine bzw. Führerkabine eines Kraftfahrzeuges verursachte Rückstreuung auswertbar. Zudem ist die von Verschmutzungen an der Windschutzscheibe verursachte Rückstreuung auswertbar. Hierfür sind die Lichtemitter sowie der Lichtsensor innenseitig der Windschutzscheibe angeordnet und die Lichtimpulse bzw. Lichtblitze sind auf die Windschutzscheibe und durch sie hindurch nach außen gerichtet. Es sind mehrere Lichtemitter für Licht unterschiedlicher Wellenlänge angeordnet, um ein von der Größe der lichtstreuenden Partikel der Streuzonen abhängiges Streuverhalten zur Unterscheidung unterschiedlicher Arten der Sichtbehinderung auszuwerten.

Aus der DE 10 2018 127 059 A1 ist ein Verfahren zur Überprüfung eines umgebungserfassenden Sensors eines Fahrzeugs bekannt. Das Verfahren basiert auf der Identifizierung von Merkmalen von stationären Objekten, die mit dem Sensor erwartungsgemäß erkannt werden sollten, und auf einem Abgleich dieser erwartungsgemäß zu erkennenden Merkmale mit Merkmalen von stationären Objekten, die mit dem Sensor tatsächlich erkannt werden. Die erwartungsgemäß zu erkennenden Merkmale werden dabei anhand von Objektdaten identifiziert, die in einer digitalen Karte hinterlegt sind. Wenn festgestellt wird, dass die erwartungsgemäß zu erkennenden Merkmale tatsächlich nicht erkannt werden oder von den tatsächlich erkannten Merkmalen stark abweichen, wird auf eine Degradation des Sensors geschlossen.

Aus der DE 10 2010 049 091 A1 ist ein Verfahren zum Erkennen einer eingeschränkten Funktionsfähigkeit eines Sensors eines Fahrzeugs bekannt, bei dem vorgesehen ist, dass das Fahrzeugs Positionsdaten eines Objekts empfängt, wobei die Positionsdaten vom Objekt ausgesendet werden, anhand der empfangenen Positionsdaten ermittelt, ob sich das Objekt in einem Erfassungsbereich des Sensors befindet, und wenn das der Fall ist, ermittelt, ob das sich im Erfassungsbereich befindende Objekt vom Sensor erfasst wird.

Aus der DE 10 2017 003 741 A1 ist ein Verfahren zur Bestimmung einer Reichweite eines strahlbasierten Sensors eines Fahrzeugs bekannt, das auf einer Auswertung von Sensorstrahlen basiert, die an einem stationären Objekt reflektiert werden.

Aus der DE 10 2019 130 037 A1 ist ein Verfahren zur Ermittlung einer Reichweite eines Sensors eines Fahrzeugs bekannt, bei dem ermittelt wird, welche Objekte aus einer Menge von in einer digitalen Karte hinterlegten Objekte vom Sensor erfasst werden und bei dem aus der Menge dieser ermittelten Objekte das am weitesten entfernte Objekt ermittelt und der Bestimmung der Reichweite des Sensors zugrunde gelegt wird.

Der Erfindung liegt die Aufgabe zu Grunde, ein neuartiges Verfahren zum Betreiben eines Fahrzeugs in einem automatisierten Fahrbetrieb anzugeben.

Die Aufgabe wird erfindungsgemäß gelöst durch ein Verfahren zum Betreiben eines Fahrzeugs in einem automatisierten Fahrbetrieb mit den Merkmalen des Anspruchs 1.

Vorteilhafte Ausgestaltungen der Erfindung sind Gegenstand der Unteransprüche.

In einem Verfahren zum Betreiben eines Fahrzeugs in einem automatisierten, insbesondere in einem hochautomatisierten oder autonomen, Fahrbetrieb wird erfindungsgemäß eine jeweilige Reichweite von umgebungserfassenden Sensoren des Fahrzeugs durch eine Auswertung von Sensorsignalen der umgebungserfassenden Sensoren geschätzt. Dies betrifft insbesondere ausschließlich diejenigen umgebungserfassenden Sensoren des Fahrzeugs, die zur Erfassung einer Umgebung des Fahrzeugs in Fahrtrichtung des Fahrzeugs vorgesehen sind, insbesondere einer Umgebung gerade und schräg vor dem Fahrzeug, insbesondere betreffend eine Fahrspur des Fahrzeugs und mindestens eine dazu benachbarte Fahrspur oder beidseits mindestens jeweils eine dazu benachbarte Fahrspur, da insbesondere diese umgebungserfassenden Sensoren zur Durchführung des automatisierten, insbesondere hochautomatisierten oder autonomen, Fahrbetriebs erforderlich sind.

Anhand der geschätzten Reichweiten wird dann geprüft, ob die umgebungserfassenden Sensoren jeweils eine für den automatisierten, insbesondere hochautomatisierten oder autonomen, Fahrbetrieb ausreichende Reichweite aufweisen, d. h. ob die jeweilige geschätzte Reichweite ausreichend ist. Die jeweilige Reichweite, d. h. die geschätzte Reichweite des jeweiligen umgebungserfassenden Sensors, wird insbesondere als ausreichend angesehen, d. h. bewertet, wenn das Fahrzeug innerhalb dieser Reichweite mit einer vorgegebenen Verzögerung in den Stillstand gebremst werden kann und/oder wenn die jeweilige Reichweite, d. h. die geschätzte Reichweite des jeweiligen umgebungserfassenden Sensors, eine für die aktuelle Geschwindigkeit des Fahrzeugs vorgegebene Mindestsensorreichweite überschreitet.

Als aktuelle Geschwindigkeit des Fahrzeugs bzw. als für die Ermittlung, ob das Fahrzeug innerhalb der geschätzten Reichweite mit der vorgegebenen Verzögerung in den Stillstand gebremst werden kann, verwendete Geschwindigkeit wird beispielsweise die Geschwindigkeit verwendet, welche für eine normale Durchführung des automatisierten, insbesondere hochautomatisierten oder autonomen, Fahrbetriebs bei freier Fahrt des Fahrzeugs vorgegeben ist, d. h. beispielsweise eine vom Fahrzeugführer vorgegebene Geschwindigkeit oder eine für den automatisierten, insbesondere hochautomatisierten oder autonomen, Fahrbetrieb vorgegebene Maximalgeschwindigkeit. Die aktuelle Geschwindigkeit des Fahrzeugs ist bei dieser Ausführungsform somit insbesondere eine, insbesondere aktuell, vorgegebene Sollgeschwindigkeit. Alternativ ist beispielsweise vorgesehen, dass als aktuelle Geschwindigkeit des Fahrzeugs bzw. als für die Ermittlung, ob das Fahrzeug innerhalb der geschätzten Reichweite mit der vorgegebenen Verzögerung in den Stillstand gebremst werden kann, verwendete Geschwindigkeit beispielsweise die aktuell tatsächlich gefahrene Geschwindigkeit verwendet wird, d. h. die Geschwindigkeit, mit der das Fahrzeug aktuell tatsächlich fährt. Bei freier Fahrt entspricht diese aktuelle Geschwindigkeit beispielsweise der oben erwähnten Geschwindigkeit, d. h. der Geschwindigkeit, die für die normale Durchführung des automatisierten, insbesondere hochautomatisierten oder autonomen, Fahrbetriebs bei freier Fahrt des Fahrzeugs vorgegeben ist, d. h. beispielsweise der vom Fahrzeugführer vorgegebenen Geschwindigkeit oder der für den automatisierten, insbesondere hochautomatisierten oder autonomen, Fahrbetrieb vorgegebenen Maximalgeschwindigkeit. In Verkehrssituationen, in denen dies nicht möglich ist, beispielsweise in einem Stau und/oder in dichtem Verkehr und/oder bei einem langsameren anderen Verkehrsteilnehmer vor dem Fahrzeug, ist die aktuell tatsächlich gefahrene Geschwindigkeit des Fahrzeugs jedoch geringer. Bei dieser Ausführungsform wird somit in einem solchen Fall diese geringere aktuell tatsächlich gefahrene Geschwindigkeit des Fahrzeugs als aktuelle Geschwindigkeit des Fahrzeugs verwendet, d. h. als für die Ermittlung, ob das Fahrzeug innerhalb der geschätzten Reichweite mit der vorgegebenen Verzögerung in den Stillstand gebremst werden kann, verwendete Geschwindigkeit.

Wenn ermittelt wird, dass nur einer der umgebungserfassenden Sensoren keine ausreichende Reichweite aufweist, d. h. dass dessen geschätzte Reichweite nicht ausreicht, oder dass nur eine vorgegebene Teilmenge der umgebungserfassenden Sensoren jeweils keine ausreichende Reichweite aufweisen, d. h. dass deren jeweilige geschätzte Reichweite nicht ausreicht, wird das Fahrzeug vorteilhafterweise weiterhin im automatisierten, insbesondere hochautomatisierten oder autonomen, Fahrbetrieb bewegt, wobei eine Geschwindigkeit des Fahrzeugs beispielsweise konstant gehalten oder vorgegeben gering reduziert wird, beispielsweise um einen vorgegebenen relativen Wert, insbesondere angegeben in Prozent, oder um einen vorgegebenen absoluten Wert, insbesondere angegeben in km/h, und wobei vorgegeben zeitlich verzögert eine Aufforderung zur Übernahme einer Fahraufgabe an einen Fahrzeugführer ausgegeben wird. Dabei kann beispielsweise vorgesehen sein, dass nur ein relativer oder absoluter Wert vorgegeben ist, um den die Geschwindigkeit des Fahrzeugs reduziert wird, oder es können beispielsweise mehrere relative Werte und/oder mehrere absolute Werte vorgegeben sein, welche in Abhängigkeit von der jeweils geschätzten Reichweite verwendet werden. D. h. die relativen Werte und/oder absoluten Werte sind dann einem jeweiligen Reichweitenwert oder Reichweitenwertebereich zugeordnet, und es wird dann der relative oder absolute Wert verwendet, welcher dem Reichweitenwert oder Reichweitenwertebereich der jeweils geschätzten Reichweite zugeordnet ist.

Wenn ermittelt wird, dass alle umgebungserfassenden Sensoren oder mehr umgebungserfassende Sensoren als die vorgegebene Teilmenge oder andere umgebungserfassende Sensoren als die vorgegebene Teilmenge jeweils keine ausreichende Reichweite aufweisen, d. h. dass deren jeweilige geschätzte Reichweite nicht ausreicht, wird das Fahrzeug vorteilhafterweise weiterhin im automatisierten, insbesondere hochautomatisierten oder autonomen, Fahrbetrieb bewegt, wobei die Geschwindigkeit des Fahrzeugs beispielsweise vorgegeben stärker reduziert wird, d. h. stärker als die oben genannte vorgegeben geringe Reduzierung, und wobei beispielsweise sofort die Aufforderung zur Übernahme der Fahraufgabe des Fahrzeugs an den Fahrzeugführer ausgegeben wird. Vorteilhafterweise wird anderenfalls, insbesondere wenn alle umgebungserfassenden Sensoren jeweils die ausreichende Reichweite aufweisen, d. h. wenn deren jeweilige geschätzte Reichweite ausreicht, der automatisierte, insbesondere hochautomatisierte oder autonome, Fahrbetrieb fortgesetzt, insbesondere uneingeschränkt.

Das erfindungsgemäße Verfahren ermöglicht somit eine Steuerung des automatisiert, insbesondere hochautomatisiert oder autonom, fahrenden Fahrzeugs in Abhängigkeit der Reichweite seiner umgebungserfassenden Sensoren. Wenn dabei festgestellt wird, dass ein Zustand vorliegt, bei dem nicht alle umgebungserfassenden Sensoren die ausreichende Reichweite aufweisen, wird, wie oben beschrieben, vorteilhafterweise eine der folgenden Handlungsoptionen ausgewählt:
- Option A: Weiterfahren mit konstanter oder nur leicht reduzierter Geschwindigkeit und zeitlich verzögerte Ausgabe der Übernahmeaufforderung an den Fahrzeugführer.
- Option B: Weiterfahren mit stärkerer Reduzierung der Geschwindigkeit und sofortige Ausgabe der Übernahmeaufforderung.

Wenn nur einer der umgebungserfassenden Sensoren oder nur eine vorgegebene Teilmenge der umgebungserfassenden Sensoren keine ausreichende Reichweite aufweist bzw. aufweisen, wird vorteilhafterweise Option A ausgewählt. Andernfalls, d. h. wenn alle umgebungserfassenden Sensoren oder mehr oder andere umgebungserfassende Sensoren als die vorgegebene Teilmenge keine ausreichende Reichweite aufweisen, wird vorteilhafterweise Option B ausgewählt.

Durch die erfindungsgemäße Lösung wird der automatisierte, insbesondere hochautomatisierte oder autonome, Fahrbetrieb des Fahrzeugs abgesichert, indem er nur dann zugelassen wird, wenn die umgebungserfassenden Sensoren bezüglich ihrer Reichweite vorgegebene Anforderungen erfüllen.

Erfindungsgemäß ist vorgesehen, dass der automatisierte, insbesondere hochautomatisierte oder autonome, Fahrbetrieb mit der ursprünglichen Geschwindigkeit fortgesetzt wird und keine Aufforderung zur Übernahme der Fahraufgabe an den Fahrzeugführer ausgegeben wird, wenn innerhalb der vorgegebenen zeitlichen Verzögerung bis zur Ausgabe der Aufforderung zur Übernahme der Fahraufgabe an den Fahrzeugführer ermittelt wird, dass die umgebungserfassenden Sensoren jeweils eine für den automatisierten, insbesondere hochautomatisierten oder autonomen, Fahrbetrieb ausreichende geschätzte Reichweite aufweisen. Die ursprüngliche Geschwindigkeit ist dabei insbesondere die vor der Reduzierung der Geschwindigkeit vom Fahrzeug gefahrene Geschwindigkeit, d. h. die vor dieser Geschwindigkeitsreduzierung als für die Ermittlung, ob das Fahrzeug innerhalb der geschätzten Reichweite mit der vorgegebenen Verzögerung in den Stillstand gebremst werden kann, verwendete Geschwindigkeit. Dies kann, wie oben beschrieben, beispielsweise die für den automatisierten, insbesondere hochautomatisierten oder autonomen, Fahrbetrieb vorgegebene Sollgeschwindigkeit, beispielsweise die vom Fahrzeugführer vorgegebene Geschwindigkeit oder die für den automatisierten, insbesondere hochautomatisierten oder autonomen, Fahrbetrieb vorgegebene Maximalgeschwindigkeit, sein, oder die insbesondere aufgrund einer jeweiligen Verkehrssituation vorliegende geringere Geschwindigkeit, wie oben beschrieben. Dadurch werden unnötige Übernahmeaufforderungen aufgrund einer nur kurzfristig nicht ausreichenden geschätzten Reichweite, welche noch keine Gefährdung für Insassen des Fahrzeugs und andere Verkehrsteilnehmer darstellt, vermieden. Als aktuelle Geschwindigkeit des Fahrzeugs bzw. als für die Ermittlung, ob das Fahrzeug innerhalb der geschätzten Reichweite mit der vorgegebenen Verzögerung in den Stillstand gebremst werden kann, verwendete Geschwindigkeit wird dabei insbesondere die ursprüngliche Geschwindigkeit des Fahrzeugs verwendet, welche beibehalten oder auf welche das Fahrzeug bei Fortsetzung des automatisierten, insbesondere hochautomatisierten oder autonomen, Fahrbetriebs wieder beschleunigt werden soll, d. h. insbesondere die vorgegebene Sollgeschwindigkeit, beispielsweise die vom Fahrzeugführer vorgegebene Geschwindigkeit oder die für den automatisierten, insbesondere hochautomatisierten oder autonomen, Fahrbetrieb vorgegebene Maximalgeschwindigkeit, oder, wie oben beschrieben, die beispielsweise aufgrund einer vorliegenden Verkehrssituation geringere Geschwindigkeit, jedoch nicht die mittlerweile möglicherweise vorliegende reduzierte Geschwindigkeit des Fahrzeugs.

Vorteilhafterweise wird der automatisierte, insbesondere hochautomatisierte oder autonome, Fahrbetrieb beendet, wenn, nachdem auf die oben beschriebene Weise die Aufforderung zur Übernahme der Fahraufgabe des Fahrzeugs an den Fahrzeugführer ausgegeben wurde, der Fahrzeugführer die Fahraufgabe nicht innerhalb eines vorgebbaren oder vorgegebenen Übernahmezeitintervalls ab dieser Ausgabe der Aufforderung übernimmt. Dann wird das Fahrzeug beispielsweise zu einer sicheren Position geführt und bis zum Stillstand abgebremst, um eine Gefährdung von Fahrzeuginsassen des Fahrzeugs und anderen Verkehrsteilnehmern zu vermeiden. Beispielsweise kann auch vorgesehen sein, dass das Fahrzeug dann innerhalb der von ihm befahrenen Fahrspur bis zum Stillstand abgebremst wird, d. h. nicht noch bis zu einer anderen Position geführt wird.

Der beschriebenen Lösung liegt insbesondere das Problem zugrunde, dass der automatisierte, insbesondere hochautomatisierte oder autonome, Fahrbetrieb für Geschwindigkeiten unterhalb einer vorgegebenen Maximalgeschwindigkeit ausgelegt ist. Die Geschwindigkeit des Fahrzeugs muss dabei an die Reichweite der umgebungserfassenden Sensoren angepasst sein, so dass das Fahrzeug angemessen, insbesondere mit einer vorgegebenen Verzögerung, auf Hindernisse reagieren kann, die plötzlich in einen Erfassungsbereich der umgebungserfassenden Sensoren eintreten. Problematisch ist hierbei, dass die Reichweiten der umgebungserfassenden Sensoren aufgrund von Verunreinigungen, Funktionsstörungen, beispielsweise Überhitzung, und/oder Witterungsbedingungen, beispielsweise Nebel und/oder Regen, soweit abnehmen können, dass ein sicherer automatisierter, insbesondere hochautomatisierter oder autonomer, Fahrbetrieb mit der aktuellen Geschwindigkeit nicht mehr sichergestellt werden kann. Die beschriebene Lösung zeigt auf, welche Maßnahmen in einem solchen Fall getroffen werden sollen.

Insbesondere wird auf die oben beschriebene Weise die jeweilige Reichweite von umgebungserfassenden Sensoren unterschiedlichen Typs geschätzt, d. h. es werden zur Umgebungserfassung insbesondere umgebungserfassende Sensoren unterschiedlichen Typs verwendet, beispielsweise mindestens ein Radarsensor, mindestens ein Lidarsensor und mindestens ein Kamerasensor. Durch diese unterschiedlichen Sensortechnologien können deren jeweilige Vorteile genutzt werden und insbesondere deren jeweilige Nachteile ausgeglichen werden.

Bei einem Lidarsensor oder Radarsensor basiert die Schätzung der Reichweite beispielsweise auf einer Auswertung von Intensitäten von Bodenreflexionen und/oder Objektreflexionen und einem Abstand zum Reflexionsort. Bei einem Kamerasensor basiert die Schätzung der Reichweite beispielsweise auf einer Ermittlung eines Abstands zu einem am weitesten entfernten noch erfassbaren Objekt. Die Reichweite kann auch durch Verfolgung des Abstands zu einem Objekt, das sich vom Fahrzeug entfernt, geschätzt werden. Die geschätzte Reichweite eines umgebungserfassenden Sensors entspricht dann dem Abstand, bei dem das verfolgte Objekt vom umgebungserfassenden Sensor nicht mehr erkannt wird.

Beispielsweise wird geprüft, ob alle umgebungserfassenden Sensoren jeweils eine für den automatisierten, insbesondere hochautomatisierten oder autonomen, Fahrbetrieb ausreichende Reichweite aufweisen, indem zyklisch aus den für die umgebungserfassenden Sensoren jeweils geschätzten Reichweiten die kleinste Reichweite ausgewählt wird und geprüft wird, ob diese kleinste geschätzte Reichweite für den automatisierten, insbesondere hochautomatisierten oder autonomen, Fahrbetrieb ausreichend ist. Dadurch muss diese Prüfung vorteilhafterweise nicht für alle umgebungserfassenden Sensoren durchgeführt werden, sondern nur für den umgebungserfassenden Sensor mit der kleinsten geschätzten Reichweite.

In einer möglichen Ausführungsform wird die jeweilige geschätzte Reichweite zunächst plausibilisiert und anhand der jeweiligen plausibilisierten geschätzten Reichweite werden dann die weiteren oben beschriebenen Verfahrensschritte durchgeführt, d. h. insbesondere wird anhand der jeweiligen plausibilisierten geschätzten Reichweite geprüft, ob die umgebungserfassenden Sensoren jeweils eine für den automatisierten, insbesondere hochautomatisierten oder autonomen, Fahrbetrieb ausreichende geschätzte Reichweite aufweisen. Dadurch wird insbesondere eine zu hohe Schätzung der Reichweite, welche tatsächlich nicht vorliegt und aufgrund welcher dann möglicherweise Objekte fehlerhaft nicht erkannt werden, vermieden. Dadurch wird eine Gefährdung von Insassen des Fahrzeugs und anderer Verkehrsteilnehmer vermieden.

Die geschätzte Reichweite des jeweiligen umgebungserfassenden Sensors wird beispielsweise als unplausibel bewertet, wenn der umgebungserfassende Sensor über einen vorgegebenen Zeitraum ein Objekt, das er gemäß seiner geschätzten Reichweite hätte erfassen müssen, nicht erfasst. Die Information, dass dieses Objekt sich innerhalb der geschätzten Reichweite des umgebungserfassenden Sensors befindet, wird beispielsweise anhand der anderen umgebungserfassenden Sensoren gebildet.

Zweckmäßigerweise wird bei einer als unplausibel bewerteten geschätzten Reichweite eines umgebungserfassenden Sensors die geschätzte Reichweite dieses umgebungserfassenden Sensors auf einen kleineren Wert korrigiert. Dies kann beispielsweise auch dazu führen, dass die geschätzte Reichweite auf den Wert Null gesetzt wird. Dadurch wird sichergestellt, dass die geschätzte Reichweite des umgebungserfassenden Sensors mindestens seiner tatsächlich vorliegenden Reichweite entspricht oder aus Sicherheitsgründen kleiner ist als seine tatsächlich vorliegende Reichweite. Dadurch wird vermieden, dass eine eingeschränkte Reichweite des umgebungserfassenden Sensors dazu führt, dass nicht oder nicht ausreichend auf vorhandene Objekte reagiert wird, da sie nicht oder zu spät detektiert werden.

Unter dem Begriff Reichweite ist insbesondere eine Erfassungsreichweite des jeweiligen umgebungserfassenden Sensors zu verstehen. Die geschätzte Reichweite ist somit die geschätzte Erfassungsreichweite des jeweiligen umgebungserfassenden Sensors.

Ausführungsbeispiele der Erfindung werden im Folgenden anhand von Zeichnungen näher erläutert.

Dabei zeigen:
- Fig. 1: schematisch ein Fahrzeug mit umgebungserfassenden Sensoren,
- Fig. 2: schematisch ein Ausführungsbeispiel einer Plausibilisierung einer während eines Verfahrens zum Betreiben des Fahrzeugs in einem automatisierten Fahrbetrieb geschätzten Reichweite eines umgebungserfassenden Sensors des Fahrzeugs,
- Fig. 3: schematisch ein weiteres Ausführungsbeispiel der Plausibilisierung,
- Fig. 4: schematisch ein weiteres Ausführungsbeispiel der Plausibilisierung,
- Fig. 5: schematisch ein weiteres Ausführungsbeispiel der Plausibilisierung,
- Fig. 6: schematisch ein weiteres Ausführungsbeispiel der Plausibilisierung,
- Fig. 7: schematisch ein weiteres Ausführungsbeispiel der Plausibilisierung, und
- Fig. 8: schematisch ein weiteres Ausführungsbeispiel der Plausibilisierung.

Einander entsprechende Teile sind in allen Figuren mit den gleichen Bezugszeichen versehen.

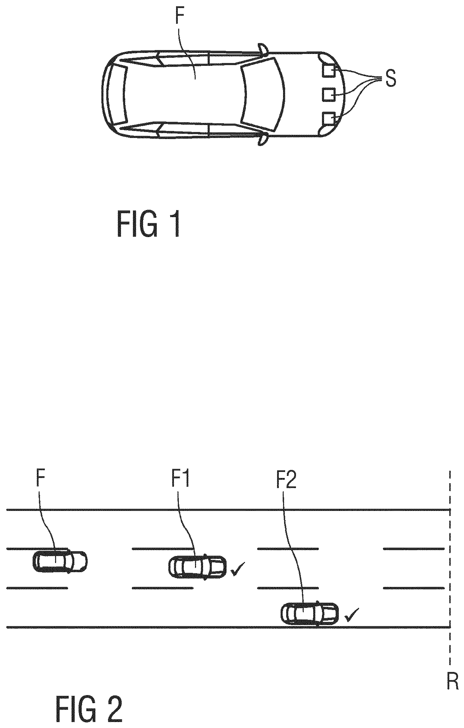

Im Folgenden wird ein Verfahren zum Betreiben eines schematisch beispielhaft in Figur 1 gezeigten Fahrzeugs F in einem automatisierten, insbesondere hochautomatisierten oder autonomen, Fahrbetrieb beschrieben. In diesem Verfahren wird, wie im Folgenden noch näher beschrieben wird, eine jeweilige Reichweite R von umgebungserfassenden Sensoren S des Fahrzeugs F geschätzt. Diese geschätzten Reichweiten R werden vorteilhafterweise plausibilisiert. Die Figuren 2 bis 8 zeigen verschiedene Beispiele für diese Plausibilisierung.

Der automatisierte, insbesondere hochautomatisierte oder autonome, Fahrbetrieb ist für Geschwindigkeiten unterhalb einer vorgegebenen Maximalgeschwindigkeit ausgelegt. Die Geschwindigkeit des Fahrzeugs F muss dabei an die Reichweite der umgebungserfassenden Sensoren S angepasst sein, so dass das Fahrzeug F angemessen, insbesondere mit einer vorgegebenen Verzögerung, auf Hindernisse reagieren kann, die plötzlich in den Erfassungsbereich der umgebungserfassenden Sensoren S eintreten. Problematisch ist hierbei, dass die Reichweiten der umgebungserfassenden Sensoren S aufgrund von Verunreinigungen, Funktionsstörungen, beispielsweise Überhitzung, und/oder Witterungsbedingungen, beispielsweise Nebel und/oder Regen, soweit abnehmen können, dass ein sicherer automatisierter, insbesondere hochautomatisierter oder autonomer, Fahrbetrieb mit der aktuellen Geschwindigkeit nicht mehr sichergestellt werden kann. Die im Folgenden beschriebene Lösung zeigt auf, welche Maßnahmen in einem solchen Fall getroffen werden sollen.

Zusammengefasst ist in dem hier beschriebenen Verfahren zum Betreiben des Fahrzeugs F im automatisierten, insbesondere im hochautomatisierten oder autonomen, Fahrbetrieb vorgesehen, dass eine jeweilige Reichweite R der umgebungserfassenden Sensoren S des Fahrzeugs F durch eine Auswertung von Sensorsignalen der umgebungserfassenden Sensoren S geschätzt wird. Dies betrifft insbesondere ausschließlich diejenigen umgebungserfassenden Sensoren S des Fahrzeugs F, die zur Erfassung einer Umgebung des Fahrzeugs F in Fahrtrichtung des Fahrzeugs F vorgesehen sind, wie in den Figuren 1 bis 8 gezeigt. Es wird geprüft, ob die umgebungserfassenden Sensoren S jeweils eine für den automatisierten, insbesondere hochautomatisierten oder autonomen, Fahrbetrieb ausreichende geschätzte Reichweite R aufweisen. Die jeweilige geschätzte Reichweite R wird insbesondere als ausreichend angesehen, d. h. bewertet, wenn das Fahrzeug F innerhalb dieser geschätzten Reichweite R mit einer vorgegebenen Verzögerung in den Stillstand gebremst werden kann und/oder wenn die jeweilige geschätzte Reichweite R eine für die aktuelle Geschwindigkeit des Fahrzeugs F vorgegebene Mindestsensorreichweite überschreitet.

Wenn ermittelt wird, dass nur einer der umgebungserfassenden Sensoren S keine ausreichende geschätzte Reichweite R aufweist oder dass nur eine vorgegebene Teilmenge der umgebungserfassenden Sensoren S jeweils keine ausreichende geschätzte Reichweite R aufweisen, wird das Fahrzeug F weiterhin im automatisierten, insbesondere hochautomatisierten oder autonomen, Fahrbetrieb bewegt, wobei die Geschwindigkeit des Fahrzeugs F konstant gehalten oder vorgegeben gering reduziert wird, beispielsweise um einen vorgegebenen relativen Wert, insbesondere angegeben in Prozent, oder um einen vorgegebenen absoluten Wert, insbesondere angegeben in km/h, und wobei sofort oder vorgegeben zeitlich verzögert eine Aufforderung zur Übernahme einer Fahraufgabe an einen Fahrzeugführer des Fahrzeugs F ausgegeben wird. Dabei kann beispielsweise vorgesehen sein, dass nur ein relativer oder absoluter Wert vorgegeben ist, um den die Geschwindigkeit des Fahrzeugs F reduziert wird, oder es können beispielsweise mehrere relative Werte und/oder mehrere absolute Werte vorgegeben sein, welche in Abhängigkeit von der jeweils geschätzten Reichweite R verwendet werden. D. h. die relativen Werte und/oder absoluten Werte sind dann einem jeweiligen Reichweitenwert oder Reichweitenwertebereich zugeordnet, und es wird dann der relative oder absolute Wert verwendet, welcher dem Reichweitenwert oder Reichweitenwertebereich der jeweils geschätzten Reichweite R zugeordnet ist.

Wenn ermittelt wird, dass alle umgebungserfassenden Sensoren S oder mehr umgebungserfassende Sensoren S als die vorgegebene Teilmenge oder andere umgebungserfassende Sensoren S als die vorgegebene Teilmenge jeweils keine ausreichende geschätzte Reichweite R aufweisen, wird das Fahrzeug F weiterhin im automatisierten, insbesondere hochautomatisierten oder autonomen, Fahrbetrieb bewegt, wobei die Geschwindigkeit des Fahrzeugs F vorgegeben stärker reduziert wird, d. h. stärker als die oben genannte vorgegeben geringe Reduzierung, und wobei sofort die Aufforderung zur Übernahme der Fahraufgabe des Fahrzeugs F an den Fahrzeugführer ausgegeben wird.

Im Folgenden wird diese Lösung nochmals detailliert beschrieben.

Das Fahrzeug F ist für den automatisierten, insbesondere hochautomatisierten oder autonomen, Fahrbetrieb eingerichtet. Das Fahrzeug F umfasst beispielsweise drei umgebungserfassende Sensoren S unterschiedlichen Typs, die zur Erfassung der Umgebung in Fahrtrichtung des Fahrzeugs F vorgesehen sind, insbesondere einen Radarsensor, einen Lidarsensor und einen Kamerasensor. Das Verfahren funktioniert ebenfalls und auf gleiche Weise auch mit mehr als drei umgebungserfassenden Sensoren S.

Der automatisierte, insbesondere hochautomatisierte oder autonome, Fahrbetrieb ist nur unterhalb einer vorgegebenen Maximalgeschwindigkeit, beispielsweise 60 km/h, möglich. Im automatisierten, insbesondere hochautomatisierten oder autonomen, Fahrbetrieb wird das Fahrzeug F höchstens auf die vorgegebene Maximalgeschwindigkeit beschleunigt. Wenn der Fahrzeugführer schneller fahren möchte, muss er die Fahraufgabe übernehmen und den automatisierten, insbesondere hochautomatisierten oder autonomen, Fahrbetrieb damit beenden.

Beispielsweise wird die Reichweitenschätzung zyklisch, insbesondere zeitzyklisch, durchgeführt. Dabei wird beispielsweise in jedem Zeitzyklus für jeden der umgebungserfassenden Sensoren S dessen Reichweite R geschätzt. Bei einem Lidarsensor oder Radarsensor basiert diese Schätzung beispielsweise auf einer Auswertung von Intensitäten von Bodenreflexionen und/oder Objektreflexionen und einem Abstand zum Reflexionsort. Bei einem Kamerasensor basiert die Schätzung beispielsweise auf einer Ermittlung eines Abstands zu einem am weitesten entfernten noch erfassbaren Objekt. Die Sensorreichweite kann auch durch Verfolgung des Abstands zu einem Objekt, das sich vom Fahrzeug F entfernt, ermittelt werden, insbesondere geschätzt werden. Die Reichweite R, insbesondere die geschätzte Reichweite R, des jeweiligen umgebungserfassenden Sensors S entspricht dann einem Abstand, bei dem das verfolgte Objekt vom umgebungserfassenden Sensor S nicht mehr erkannt wird.

Beispielsweise wird eine Mindestsensorreichweite vorgegeben, die erforderlich ist, um den automatisierten, insbesondere hochautomatisierten oder autonomen, Fahrbetrieb mit der aktuellen Geschwindigkeit des Fahrzeugs F zuzulassen. Die geschätzte Reichweite R des jeweiligen umgebungserfassenden Sensors S ist somit für den automatisierten, insbesondere hochautomatisierten oder autonomen, Fahrbetrieb ausreichend, wenn sie größer als die Mindestsensorreichweite ist.

Im automatisierten, insbesondere hochautomatisierten oder autonomen, Fahrbetrieb wird beispielsweise zyklisch aus der Menge der für die im hier beschriebenen Beispiel drei umgebungserfassenden Sensoren S geschätzten Reichweiten R die kleinste geschätzte Reichweite R ausgewählt und es wird geprüft, ob diese kleinste geschätzte Reichweite R größer als die Mindestsensorreichweite ist. Es wird also ermittelt, ob alle umgebungserfassenden Sensoren S eine für den automatisierten, insbesondere hochautomatisierten oder autonomen, Fahrbetrieb ausreichende geschätzte Reichweite R aufweisen. Wenn das der Fall ist, wird der automatisierte, insbesondere hochautomatisierte oder autonome, Fahrbetrieb regulär durchgeführt.

Wenn aus der Menge der geschätzten Reichweiten R nur eine der geschätzten Reichweiten R kleiner als die Mindestsensorreichweite ist, wenn also ein Zustand vorliegt, bei dem nur einer der umgebungserfassenden Sensoren S eine für den automatisierten, insbesondere hochautomatisierten oder autonomen, Fahrbetrieb nicht ausreichende geschätzte Reichweite R aufweist, wird vorteilhafterweise der Fahrzeugführer zur Übernahme der Fahraufgabe aufgefordert und der automatisierte, insbesondere hochautomatisierte oder autonome, Fahrbetrieb wird vorteilhafterweise zunächst unverändert oder mit geringfügig reduzierter Geschwindigkeit fortgesetzt. Diese Übernahmeaufforderung wird vorteilhafterweise erst nach einer vorgegebenen Wartezeit, d. h. vorgegeben zeitlich verzögert, ausgegeben. Insbesondere wird sie nur dann ausgegeben, wenn der Zustand, dass nur einer der umgebungserfassenden Sensoren S keine ausreichende geschätzte Reichweite R aufweist, bei Ablauf der Wartezeit noch besteht.

Wenn während der Wartezeit der Zustand eintritt, dass wieder alle umgebungserfassenden Sensoren S eine ausreichende geschätzte Reichweite R aufweisen, besteht kein Bedarf mehr, die Fahraufgabe an den Fahrzeugführer zu übergeben, und es wird dann vorteilhafterweise keine Übernahmeaufforderung ausgegeben und der automatisierte, insbesondere hochautomatisierte oder autonome, Fahrbetrieb wird unverändert fortgesetzt.

Der automatisierte, insbesondere hochautomatisierte oder autonome, Fahrbetrieb wird vorteilhafterweise beendet, wenn der Fahrzeugführer nach Ausgabe der Übernahmeaufforderung die Fahraufgabe nicht innerhalb eines vorgebbaren oder vorgegebenen Übernahmezeitintervalls nach der Ausgabe der Übernahmeaufforderung übernimmt.

Wenn aus der Menge der geschätzten Reichweiten R mehr als eine der Reichweiten R kleiner als die Mindestsensorreichweite ist, wenn also ein Zustand vorliegt, bei dem mehr als einer der umgebungserfassenden Sensoren S eine für den automatisierten, insbesondere hochautomatisierten oder autonomen, Fahrbetrieb nicht ausreichende geschätzte Reichweite R aufweist, wird vorteilhafterweise der Fahrzeugführer zur Übernahme der Fahraufgabe aufgefordert und vorteilhafterweise der automatisierte, insbesondere hochautomatisierte oder autonome, Fahrbetrieb mit einem Bremseingriff, durch den das Fahrzeug F verstärkt verzögert wird, fortgesetzt. Der automatisierte, insbesondere hochautomatisierte oder autonome, Fahrbetrieb wird vorteilhafterweise beendet, wenn der Fahrzeugführer die Fahraufgabe nicht innerhalb des vorgebbaren oder vorgegebenen Übernahmezeitintervalls nach der Aufforderung übernimmt.

Vorzugsweise werden die obigen Verfahrensschritte, insbesondere die Verfahrensschritte nach der Schätzung der jeweiligen Reichweite R der umgebungserfassenden Sensoren S des Fahrzeugs F, erst nach einer Plausibilisierung dieser geschätzten Reichweiten R durchgeführt. Die geschätzte Reichweite R des jeweiligen umgebungserfassenden Sensors S wird dabei beispielsweise als unplausibel bewertet, wenn der umgebungserfassende Sensor S über einen vorgegebenen Zeitraum ein bestimmtes Objekt, das er gemäß seiner geschätzten Reichweite R hätte erfassen müssen, nicht erfasst. Die Information, dass dieses bestimmte Objekt sich innerhalb seiner geschätzten Reichweite R befindet, wird beispielsweise anhand der anderen umgebungserfassenden Sensoren S gebildet. Wenn die geschätzte Reichweite R eines umgebungserfassenden Sensors S als unplausibel bewertet wird, wird sie vorteilhafterweise auf einen kleineren Wert korrigiert. Im Extremfall kann die geschätzte Reichweite R auch auf den Wert null gesetzt werden.

Im Detail wird die Plausibilisierung der geschätzten Reichweite R des jeweiligen umgebungserfassenden Sensors S beispielsweise wie folgt durchgeführt:
Durch Sensordatenfusion werden bestimmte Objekte, auch als Fusionsobjekte bezeichnet, beispielweise bewegte andere Fahrzeuge F1, F2, F3, in einem relevanten Umgebungsbereich, beispielsweise auf einer Fahrspur des Fahrzeugs F und auf Nachbarfahrspuren, erkannt. Die vom umgebungserfassenden Sensor S geschätzte Reichweite R wird, insbesondere von einem das Verfahren durchführenden und entsprechend hierfür ausgebildeten und eingerichteten System, das insbesondere ein Bestandteil des Fahrzeugs F ist und insbesondere zur Durchführung des automatisierten, insbesondere hochautomatisierten oder autonomen, Fahrbetriebs des Fahrzeugs F ausgebildet und eingerichtet ist, anhand der Fusionsobjekte plausibilisiert, d. h. bestätigt.

Die geschätzte Reichweite R des umgebungserfassenden Sensors S wird als plausibel klassifiziert, d. h. bestätigt, wenn die Fusionsobjekte mit ausreichender Güte erkannt und signalisiert werden. Die geschätzte Reichweite R des umgebungserfassenden Sensors S wird als nicht plausibel klassifiziert, wenn die Fusionsobjekte oder eines oder mehrere der Fusionsobjekte nicht mit ausreichender Güte erkannt und signalisiert werden.

Solche Fusionsobjekte, die nicht mit ausreichender Güte erkannt und signalisiert werden, werden als Kontraindikatoren betrachtet. Wird ein Kontraindikator erkannt, kann dieser einen Hinweis auf eine nicht plausible geschätzte Reichweite R geben.

Ein Kontraindikator-Kandidat muss vorteilhafterweise eine Reihe von Kriterien erfüllen, bevor er als Kontraindikator bestätigt wird. Er muss sich beispielsweise innerhalb der geschätzten Reichweite R des umgebungserfassenden Sensors S befinden. Er muss sich beispielsweise innerhalb eines definierten Detektionsbereichs, d. h. Erfassungsbereichs, des umgebungserfassenden Sensors S befinden. Beispielsweise muss er vom umgebungserfassenden Sensor S erfassbar sein. Der Kontraindikator-Kandidat, d. h. das Objekt, insbesondere Fusionsobjekt, muss beispielsweise vorgegebene Eigenschaften, zum Beispiel eine vorgegebene Reflektivität, aufweisen, um für den umgebungserfassenden Sensor S erfassbar zu sein. Der Kontraindikator-Kandidat darf beispielsweise nicht verdeckt sein in Bezug auf den umgebungserfassenden Sensor S. Das Objekt ist beispielsweise nur dann ein Kontraindikator-Kandidat oder bereits ein Kontraindikator, wenn es vom umgebungserfassenden Sensor S nicht oft genug erkannt wird und/oder wenn beispielsweise eine Treffer-Quote und/oder eine True-Positive-Rate, d. h. Wahr-Positiv-Rate, des umgebungserfassenden Sensors S hinsichtlich des Objektes, insbesondere Fusionsobjekts, sich von einer vorgegebenen Mindest-Treffer-Quote und/oder True-Positive-Rate, d. h. Wahr-Positiv-Rate, unterscheidet, insbesondere die vorgegebene Mindest-Treffer-Quote und/oder die vorgegebene Wahr-Positiv-Rate unterschreitet. Das Objekt ist beispielsweise nur dann ein Kontraindikator-Kandidat oder bereits ein Kontraindikator, wenn es vom umgebungserfassenden Sensor S erfasst wird, aber eine Erfassungsgüte und/oder Erfassungsqualität nicht ausreichend ist. Das Objekt ist beispielsweise nur dann ein Kontraindikator-Kandidat oder bereits ein Kontraindikator, wenn der umgebungserfassende Sensor S das Objekt in der vorliegenden Situation gemäß der Sensorspezifikation nicht unterpriorisieren oder übersehen darf, beispielsweise wenn die Signalschnittstelle voll ist, zum Beispiel wenn das Objekt vom umgebungserfassenden Sensor S gemäß Spezifikation nicht als nicht relevant klassifiziert werden darf. Unter dem Begriff der vollen Signalschnittstelle ist insbesondere zu verstehen, dass der jeweilige umgebungserfassende Sensor S nur eine begrenzte Anzahl Objekte, insbesondere über eine Buskommunikation übermitteln kann, beispielsweise zu einer Auswerteeinheit. Wenn sehr viele Objekte detektiert werden, d. h. mehr als maximal übermittelbar, muss der jeweilige umgebungserfassende Sensor S priorisieren, welche Objekte er übermittelt. Dies geschieht insbesondere anhand vorgegebener Priorisierungsregeln, welche an die umgebungserfassenden Sensoren S spezifiziert wurden.

In den Figuren 2 bis 8 sind die Fusionsobjekte als andere Fahrzeuge F1, F2, F3 dargestellt, welche sich zusammen mit dem Fahrzeug F auf einer Fahrbahn, hier jeweils mit mehreren Fahrspuren, befinden, hier somit jeweils auf der Fahrspur des Fahrzeugs F oder auf einer benachbarten Fahrspur. Sie befinden sich dabei jeweils vor dem Fahrzeug F. Mit einem Häkchen ist dabei schematisch dargestellt, welches der anderen Fahrzeuge F1, F2, F3 von dem umgebungserfassenden Sensor S, dessen geschätzte Reichweite R plausibilisiert werden soll, erfasst wurde. Mit einem Kreuz ist schematisch dargestellt, welches der anderen Fahrzeuge F1, F2, F3 vom umgebungserfassenden Sensor S nicht erfasst wurde. Ein anderes Fahrzeug F1, F2, F3, das vom umgebungserfassenden Sensor S nicht erfasst wurde, ist ein Kontraindikator für die Plausibilität der geschätzten Reichweite R. Die geschätzte Reichweite R des umgebungserfassenden Sensors S ist durch eine gestrichelte Linie angedeutet.

In Figur 2 hat der umgebungserfassende Sensor S beide anderen Fahrzeuge F1, F2, die sich innerhalb der geschätzten Reichweite R befinden, erfasst. Es wird somit bestätigt, dass die anderen Fahrzeuge F1, F2 sich innerhalb der geschätzten Reichweite R und auch der tatsächlich vorliegenden Reichweite des umgebungserfassenden Sensors S befinden. Es gibt keinen Kontraindikator für die geschätzte Reichweite R. Die geschätzte Reichweite R des umgebungserfassenden Sensors S wird daher als plausibel bewertet.

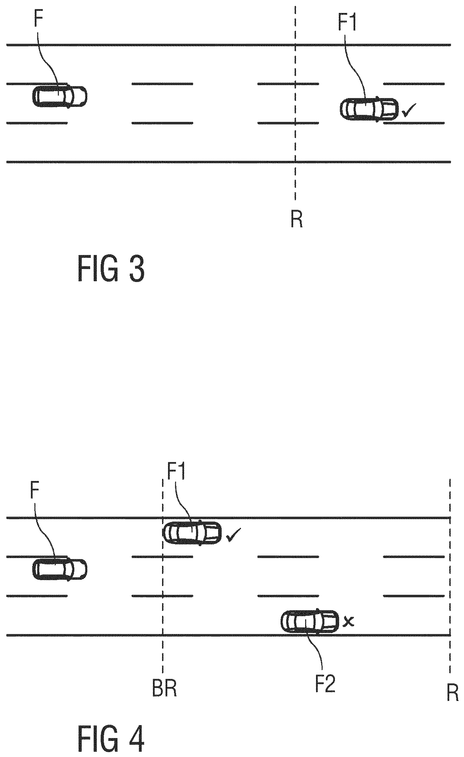

In Figur 3 hat der umgebungserfassende Sensor S das andere Fahrzeug F1 erfasst, obwohl es sich außerhalb der geschätzten Reichweite R des umgebungserfassenden Sensors S befindet. Es gibt keinen Kontraindikator für die geschätzte Reichweite R. Die geschätzte Reichweite R des umgebungserfassenden Sensors S wird daher als plausibel bewertet.

In Figur 4 hat der umgebungserfassende Sensor S das weiter entfernte zweite andere Fahrzeug F2 nicht erfasst, obwohl er es hätte erfassen müssen, da es sich innerhalb der geschätzten Reichweite R des umgebungserfassenden Sensors S befindet. Es wird somit bestätigt, dass das zweite andere Fahrzeug F2 sich außerhalb der tatsächlichen Reichweite des umgebungserfassenden Sensors S befindet. Das zweite andere Fahrzeug F2 ist somit ein Kontraindikator für die geschätzte Reichweite R. Das erste andere Fahrzeug F1, welches weniger weit entfernt ist, wurde vom umgebungserfassenden Sensor S erfasst. Die Sensorreichweite bis zu diesem ersten anderen Fahrzeug F1 ist somit als sicher bestätigt. Die geschätzte Reichweite R des umgebungserfassenden Sensors S wird aufgrund des Kontraindikators als unplausibel bewertet und auf die als sicher bestätigte Sensorreichweite BR bis zum ersten anderen Fahrzeug F1 korrigiert, d. h. diese als sicher bestätigte Sensorreichweite BR ist die neue geschätzte Reichweite R.

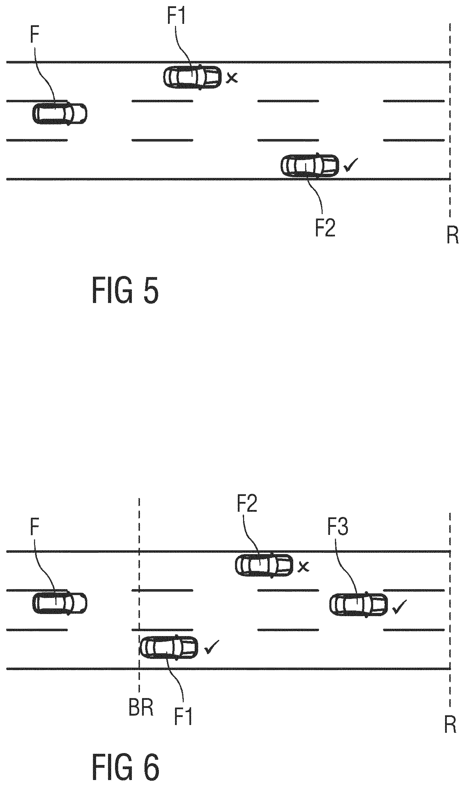

In Figur 5 hat der umgebungserfassende Sensor S das erste andere Fahrzeug F1 nicht erfasst, obwohl er es hätte erfassen müssen, da es sich innerhalb der geschätzten Reichweite R des umgebungserfassenden Sensors S befindet. Es wird somit bestätigt, dass das erste andere Fahrzeug F1 sich außerhalb der tatsächlichen Reichweite des umgebungserfassenden Sensors S befindet. Zwar hat der umgebungserfassende Sensor S das weiter entfernte zweite andere Fahrzeug F2 erfasst, das sich ebenfalls innerhalb der geschätzten Reichweite R befindet, doch diese Erfassung des weiter entfernten zweiten anderen Fahrzeugs F2 wird aufgrund der Nichterfassung des weniger weit entfernten ersten anderen Fahrzeugs F1 als unsicher bestätigt. Das erste andere Fahrzeug F1 ist ein Kontraindikator für die geschätzte Reichweite R. Die geschätzte Reichweite R des umgebungserfassenden Sensors S wird daher als unplausibel bewertet. Sie wird auf Null gesetzt, da es keine als sicher bestätigte Sensorreichweite BR des umgebungserfassenden Sensors S gibt. Die neue geschätzte Reichweite R des umgebungserfassenden Sensors S ist somit Null.

In Figur 6 hat der umgebungserfassende Sensor S das zweite andere Fahrzeug F2 nicht erfasst, obwohl er es hätte erfassen müssen, da es sich innerhalb der geschätzten Reichweite R des umgebungserfassenden Sensors S befindet. Es wird somit bestätigt, dass sich das zweite andere Fahrzeug F2 außerhalb der tatsächlichen Reichweite des umgebungserfassenden Sensors S befindet. Zwar hat der umgebungserfassende Sensor S das weiter entfernte dritte andere Fahrzeug F3 erfasst, dass sich ebenfalls innerhalb der geschätzten Reichweite R befindet, doch diese Erfassung des weiter entfernten dritten anderen Fahrzeugs F3 wird aufgrund der Nichterfassung des weniger weit entfernten zweiten anderen Fahrzeugs F2 als unsicher bestätigt. Das zweite andere Fahrzeug F2 ist ein Kontraindikator für die geschätzte Reichweite R. Das am nächsten zum umgebungserfassenden Sensor S des Fahrzeugs F positionierte erste andere Fahrzeug F1 wurde vom umgebungserfassenden Sensor S erfasst. Die Reichweite des umgebungserfassenden Sensors S bis zu diesem ersten anderen Fahrzeug F1 ist somit als sicher bestätigt. Die geschätzte Reichweite R des umgebungserfassenden Sensors S wird aufgrund des Kontraindikators als unplausibel bewertet und wird auf die als sicher bestätigte Sensorreichweite BR bis zum ersten anderen Fahrzeug F1 korrigiert. Dies ist somit die neue geschätzte Reichweite R.

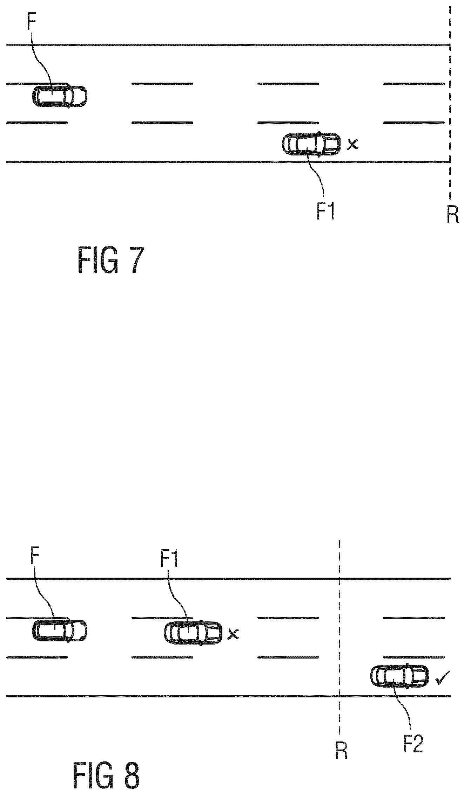

In Figur 7 hat der umgebungserfassende Sensor S das andere Fahrzeug F1 nicht erfasst, obwohl er es hätte erfassen müssen, da es sich innerhalb der geschätzten Reichweite R des umgebungserfassenden Sensors S befindet. Es wird somit bestätigt, dass sich das andere Fahrzeug F1 außerhalb der tatsächlichen Reichweite des umgebungserfassenden Sensors S befindet. Das andere Fahrzeug F1 ist damit ein Kontraindikator für die geschätzte Reichweite R. Die geschätzte Reichweite R des umgebungserfassenden Sensors S wird daher als unplausibel bewertet. Sie wird auf den Wert Null gesetzt, da es keine als sicher bestätigte Sensorreichweite BR des umgebungserfassenden Sensors S gibt. Die neue geschätzte Reichweite R des umgebungserfassenden Sensors S ist somit Null.

In Figur 8 hat der umgebungserfassende Sensor S das erste andere Fahrzeug F1 nicht erfasst, obwohl er es hätte erfassen müssen, da es sich innerhalb der geschätzten Reichweite R des umgebungserfassenden Sensors S befindet. Es wird somit bestätigt, dass sich das erste andere Fahrzeug F1 außerhalb der tatsächlichen Reichweite des umgebungserfassenden Sensors S befindet. Zwar hat der umgebungserfassende Sensor S das weiter entfernte zweite andere Fahrzeug F2 erfasst, obwohl es sich außerhalb der geschätzten Reichweite R des umgebungserfassenden Sensors S befindet, doch diese Erfassung des weiter entfernten zweiten anderen Fahrzeugs F2 wird aufgrund der Nichterfassung des weniger weit entfernten ersten anderen Fahrzeugs F1 als unsicher bestätigt. Das erste andere Fahrzeug F1 ist ein Kontraindikator für die geschätzte Reichweite R des umgebungserfassenden Sensors S. Die geschätzte Reichweite R des umgebungserfassenden Sensors S wird daher als unplausibel bewertet. Sie wird auf den Wert Null gesetzt, da es keine als sicher bestätigte Sensorreichweite BR des umgebungserfassenden Sensors S gibt. Die neue geschätzte Reichweite R des umgebungserfassenden Sensors S ist somit Null.

Beispielsweise wird anhand der geschätzten Reichweiten R der umgebungserfassenden Sensoren S eine Systemreichweite ermittelt. Die Systemreichweite entspricht beispielsweise dem Minimum der geschätzten Reichweiten R aller umgebungserfassenden Sensoren S des Fahrzeugs F.

Beispielsweise wird anhand einer geschätzten Reichweite R einer, insbesondere vorgegebenen, Teilmenge der umgebungserfassenden Sensoren S des Fahrzeugs F eine Teilsystemreichweite ermittelt. Beispielsweise entspricht die Teilsystemreichweite dem Minimum der geschätzten Reichweiten R von Hauptsensoren. Die Teilmenge der umgebungserfassenden Sensoren S umfasst somit nur diese Hauptsensoren, beispielsweise nur den Radarsensor und den Kamerasensor. Alternativ umfasst die Teilmenge beispielsweise nur die besten umgebungserfassenden Sensoren S in einer jeweils vorliegenden Situation, d. h. nur die umgebungserfassenden Sensoren S, welche in dieser Situation die beste, d. h. größte, geschätzte Reichweite R aufweisen. Die Teilsystemreichweite entspricht dann beispielsweise dem Minimum der geschätzten Reichweiten R dieser besten umgebungserfassenden Sensoren S in der jeweils vorliegenden Situation.

Beispielsweise weist das Fahrzeug F, wie oben bereits erwähnt, drei umgebungserfassende Sensoren S auf.

In einem möglichen Ausführungsbeispiel hat der erste umgebungserfassende Sensor S eine geschätzte Reichweite R von 70 m, der zweite umgebungserfassende Sensor S eine geschätzte Reichweite R von 150 m und der dritte umgebungserfassende Sensor S eine geschätzte Reichweite R von 200 m. Das Minimum aller drei geschätzten Reichweiten R als Systemreichweite wäre dann 70 m. Das Minimum der geschätzten Reichweiten R der beiden besten umgebungserfassenden Sensoren S in der vorliegenden Situation als Teilsystemreichweite wäre dann 150 m.

In einem möglichen Ausführungsbeispiel hat der erste umgebungserfassende Sensor S eine geschätzte Reichweite R von 0 m, der zweite umgebungserfassende Sensor S eine geschätzte Reichweite R von 0 m und der dritte umgebungserfassende Sensor S eine geschätzte Reichweite R von 200 m. Das Minimum aller drei geschätzten Reichweiten R als Systemreichweite wäre dann 0 m. Das Minimum der geschätzten Reichweiten R der beiden besten umgebungserfassenden Sensoren S in der vorliegenden Situation als Teilsystemreichweite wäre dann ebenfalls 0 m.

In einem möglichen Ausführungsbeispiel hat der erste umgebungserfassende Sensor S eine geschätzte Reichweite R von 0 m, der zweite umgebungserfassende Sensor S eine geschätzte Reichweite R von 150 m und der dritte umgebungserfassende Sensor S eine geschätzte Reichweite R von 200 m. Das Minimum aller drei geschätzten Reichweiten R als Systemreichweite wäre dann 0 m. Das Minimum der geschätzten Reichweiten R der beiden besten umgebungserfassenden Sensoren S in der vorliegenden Situation als Teilsystemreichweite wäre dann 150 m.

Beispielsweise ist dann vorgesehen, dass bei einer für den automatisierten, insbesondere hochautomatisierten oder autonomen, Fahrbetrieb nicht ausreichenden Systemreichweite die Aufforderung zur Übernahme der Fahraufgabe an den Fahrzeugführer ausgegeben wird. Falls die Teilsystemreichweite für den automatisierten, insbesondere hochautomatisierten oder autonomen, Fahrbetrieb ausreichend ist, wird beispielsweise zusätzlich die Geschwindigkeit des Fahrzeugs F konstant gehalten oder leicht reduziert, bis der Fahrzeugführer die Fahraufgabe übernommen hat. Falls die Teilsystemreichweite für den automatisierten, insbesondere hochautomatisierten oder autonomen, Fahrbetrieb nicht ausreichend ist, wird beispielsweise das Fahrzeug F stärker verzögert oder es wird eine andere, insbesondere stärkere, Systemreaktion ausgelöst.

Falls die Teilsystemreichweite für den automatisierten, insbesondere hochautomatisierten oder autonomen, Fahrbetrieb ausreichend ist, ist es erfindungsgemäß vorgesehen dass zunächst keine Aufforderung zur Übernahme der Fahraufgabe an den Fahrzeugführer ausgegeben wird, sondern die Fahrt des Fahrzeugs F zunächst anhand der Teilsystemreichweite für eine vorgegebene maximale Zeitspanne fortgesetzt wird. In dieser Zeitspanne kann sich die Systemreichweite wieder verbessern und es besteht keine Einschränkung mehr hinsichtlich der Systemreichweite und der daraus resultierenden Geschwindigkeit für den automatisierten, insbesondere hochautomatisierten oder autonomen, Fahrbetrieb. Wenn die Systemreichweite sich nicht wieder verbessert hat, also insbesondere ein hierfür vorhandenes Problem weiterhin besteht, dann wird eine Ausgabe der Aufforderung zur Übernahme der Fahraufgabe an den Fahrzeugführer erfolgen Es wird somit diese Aufforderung zur Übernahme der Fahraufgabe an den Fahrzeugführer zeitlich verzögert ausgegeben, wobei diese Ausgabe entfällt, wenn sich die Systemreichweite innerhalb dieser zeitlichen Verzögerung wieder ausreichend verbessert hat.

Vereinfacht zusammengefasst ist beispielsweise vorgesehen, dass, wenn die geschätzte Reichweite R insbesondere eines oder mehrerer Hauptsensoren nicht mehr ausreichend ist zur Durchführung des automatisierten, insbesondere hochautomatisierten oder autonomen, Fahrbetriebs, dies für die vorgegebene Zeitspanne mit den anderen umgebungserfassenden Sensoren S überbrückt wird, wenn diese anderen umgebungserfassenden Sensoren S eine ausreichende geschätzte Reichweite R aufweisen und die Situation damit beherrscht werden kann. Es wird dann erst nach Ablauf dieser vorgegebenen Zeitspanne auf die nicht ausreichende geschätzte Reichweite R reagiert, insbesondere durch die Ausgabe der Aufforderung zur Übernahme der Fahraufgabe an den Fahrzeugführer.

## Patentansprüche

1. Verfahren zum Betreiben eines Fahrzeugs (F) in einem automatisierten Fahrbetrieb, wobei
- eine jeweilige Reichweite (R) von umgebungserfassenden Sensoren (S) des Fahrzeugs (F) durch eine Auswertung von Sensorsignalen der umgebungserfassenden Sensoren (S) geschätzt wird,
- geprüft wird, ob die umgebungserfassenden Sensoren (S) jeweils eine für den automatisierten Fahrbetrieb ausreichende geschätzte Reichweite (R) aufweisen,
- wenn ermittelt wird, dass nur einer der umgebungserfassenden Sensoren (S) keine ausreichende geschätzte Reichweite (R) aufweist oder dass nur eine vorgegebene Teilmenge der umgebungserfassenden Sensoren (S) jeweils keine ausreichende geschätzte Reichweite (R) aufweist das Fahrzeug (F) weiterhin im automatisierten Fahrbetrieb bewegt wird, wobei eine Geschwindigkeit des Fahrzeugs (F) konstant gehalten oder vorgegeben gering reduziert wird, wobei vorgegeben zeitlich verzögert eine Aufforderung zur Übernahme einer Fahraufgabe an einen Fahrzeugführer ausgegeben wird, und wobei der automatisierte Fahrbetrieb mit der ursprünglichen Geschwindigkeit fortgesetzt wird und keine Aufforderung zur Übernahme der Fahraufgabe an den Fahrzeugführer ausgegeben wird, wenn innerhalb der vorgegebenen zeitlichen Verzögerung bis zur Ausgabe der Aufforderung zur Übernahme der Fahraufgabe an den Fahrzeugführer ermittelt wird, dass die umgebungserfassenden Sensoren (S) jeweils eine für den automatisierten Fahrbetrieb ausreichende geschätzte Reichweite (R) aufweisen,
- wenn ermittelt wird, dass alle umgebungserfassenden Sensoren (S) oder mehr oder andere umgebungserfassende Sensoren (S) als die vorgegebene Teilmenge jeweils keine ausreichende geschätzte Reichweite (R) aufweisen, das Fahrzeug (F) weiterhin im automatisierten Fahrbetrieb bewegt wird, wobei die Geschwindigkeit des Fahrzeugs (F) vorgegeben stärker als gering reduziert wird, und wobei sofort die Aufforderung zur Übernahme der Fahraufgabe des Fahrzeugs (F) an den Fahrzeugführer ausgegeben wird.

2. Verfahren nach Anspruch 1,
**dadurch gekennzeichnet, dass** die jeweilige geschätzte Reichweite (R) als ausreichend bewertet wird, wenn das Fahrzeug (F) innerhalb dieser geschätzten Reichweite (R) mit einer vorgegebenen Verzögerung in den Stillstand gebremst werden kann und/oder wenn die jeweilige geschätzte Reichweite (R) eine für die aktuelle Geschwindigkeit des Fahrzeugs (F) vorgegebene Mindestsensorreichweite überschreitet.

3. Verfahren nach einem der vorhergehenden Ansprüche,
**dadurch gekennzeichnet, dass** der automatisierte Fahrbetrieb beendet wird, wenn der Fahrzeugführer die Fahraufgabe nicht innerhalb eines vorgebbaren oder vorgegebenen Übernahmezeitintervalls ab der Ausgabe der Aufforderung übernimmt.

4. Verfahren nach einem der vorhergehenden Ansprüche,
**dadurch gekennzeichnet, dass** die jeweilige Reichweite (R) derjenigen umgebungserfassenden Sensoren (S) des Fahrzeugs (F) geschätzt wird, die zur Erfassung einer Umgebung des Fahrzeugs (F) in Fahrtrichtung des Fahrzeugs (F) vorgesehen sind.

5. Verfahren nach einem der vorhergehenden Ansprüche,
**dadurch gekennzeichnet, dass** die jeweilige Reichweite (R) von umgebungserfassenden Sensoren (S) unterschiedlichen Typs geschätzt wird.

6. Verfahren nach einem der vorhergehenden Ansprüche,
**dadurch gekennzeichnet, dass** die jeweilige Reichweite (R) mindestens eines Radarsensors, mindestens eines Lidarsensors und mindestens eines Kamerasensors geschätzt wird.

7. Verfahren nach einem der vorhergehenden Ansprüche,
**dadurch gekennzeichnet, dass** die jeweilige geschätzte Reichweite (R) zunächst plausibilisiert wird und anhand der jeweiligen plausibilisierten geschätzten Reichweite (R) geprüft wird, ob die umgebungserfassenden Sensoren (S) jeweils eine für den automatisierten Fahrbetrieb ausreichende geschätzte Reichweite (R) aufweisen.

8. Verfahren nach Anspruch 7,
**dadurch gekennzeichnet, dass** die geschätzte Reichweite (R) des jeweiligen umgebungserfassenden Sensors (S) als unplausibel bewertet wird, wenn der umgebungserfassende Sensor (S) über einen vorgegebenen Zeitraum ein Objekt, das er gemäß seiner geschätzten Reichweite (R) hätte erfassen müssen, nicht erfasst.

9. Verfahren nach Anspruch 7 oder 8,
**dadurch gekennzeichnet, dass** bei einer als unplausibel bewerteten geschätzten Reichweite (R) eines umgebungserfassenden Sensor (S) die geschätzte Reichweite (R) dieses umgebungserfassenden Sensors (S) auf einen kleineren Wert korrigiert wird.

## Claims

1. Method for operating a vehicle (F) in an automated driving operation, wherein
- a particular range (R) of environment-detecting sensors (S) of the vehicle (F) is estimated by evaluating sensor signals from the environment-detecting sensors (S),
- it is checked whether the environment-detecting sensors (S) each have an estimated range (R) sufficient for the automated driving operation,
- if it is determined that only one of the environment-detecting sensors (S) does not have a sufficient estimated range (R) or that only a predetermined subset of the environment-detecting sensors (S) does not have a sufficient estimated range (R), the vehicle (F) continues to be moved in the automated driving operation, wherein the speed of the vehicle (F) is kept constant or reduced by a predetermined slight extent, wherein a request to take over a driving task is issued to a vehicle driver after a predetermined time delay, and wherein the automated driving operation continues at the original speed and no request to take over the driving task is issued to the vehicle driver, if it is determined within the predetermined time delay until the request to take over the driving task is issued to the vehicle driver that the environment-detecting sensors (S) each have an estimated range (R) sufficient for the automated driving operation,
- if it is determined that all of the environment-detecting sensors (S) or more or other environment-detecting sensors (S) than the predetermined subset do not have a sufficient estimated range (R), the vehicle (F) continues to be moved in the automated driving operation, wherein the speed of the vehicle (F) is reduced by a predetermined more significant extent, and wherein the request to take over the driving task of the vehicle (F) is immediately issued to the vehicle driver.

2. Method according to claim 1,
**characterized in that** the particular estimated range (R) is assessed as sufficient if the vehicle (F) can be braked to a standstill within this estimated range (R) with a predetermined delay and/or if the particular estimated range (R) exceeds a minimum sensor range predetermined for the current speed of the vehicle (F).

3. Method according to either of the preceding claims,
**characterized in that** the automated driving operation is terminated if the vehicle driver does not take over the driving task within a predeterminable or predetermined takeover time interval from the issuance of the request.

4. Method according to any of the preceding claims,
**characterized in that** the particular range (R) of the environment-detecting sensors (S) of the vehicle (F) which are intended to detect the environment of the vehicle (F) in the direction of travel of the vehicle (F) is estimated.

5. Method according to any of the preceding claims,
**characterized in that** the particular range (R) of environment-detecting sensors (S) of different types is estimated.

6. Method according to any of the preceding claims,
**characterized in that** the respective ranges (R) of at least one radar sensor, at least one lidar sensor and at least one camera sensor are estimated.

7. Method according to any of the preceding claims,
**characterized in that** each estimated range (R) is first checked for plausibility and, based on the particular plausibility-checked estimated range (R), it is checked whether the environment-detecting sensors (S) each have an estimated range (R) that is sufficient for the automated driving operation.

8. Method according to claim 7,
**characterized in that** the estimated range (R) of the particular environment-detecting sensor (S) is assessed as implausible if the environment-detecting sensor (S) does not detect an object over a predetermined period of time which it should have detected according to its estimated range (R).

9. Method according to claim 7 or claim 8,
**characterized in that** if an estimated range (R) of an environment-detecting sensor (S) is assessed as implausible, the estimated range (R) of this environment-detecting sensor (S) is corrected to a smaller value.

## Revendications

1. Procédé permettant de faire fonctionner un véhicule (F) dans un fonctionnement de conduite automatisé, dans lequel
- une portée respective (R) de capteurs (S) de détection d'environnement du véhicule (F) est estimée par une évaluation de signaux de capteurs des capteurs (S) de détection d'environnement,
- il est vérifié si les capteurs (S) de détection d'environnement présentent respectivement une portée (R) estimée suffisante pour le fonctionnement de conduite automatisé,
- s'il est déterminé, que seul un des capteurs (S) de détection d'environnement ne présente pas de portée (R) estimée suffisante ou que seul un sous-ensemble prédéfini des capteurs (S) de détection d'environnement ne présente respectivement pas une portée (R) estimée suffisante, le véhicule (F) continue à être déplacé en fonctionnement de conduite automatisé, dans lequel une vitesse du véhicule (F) est maintenue constante ou réduite faiblement de manière prédéfinie, dans lequel une demande de prise en charge d'une tâche de conduite est émise à un conducteur de véhicule avec un retard temporel prédéfini, et dans lequel le fonctionnement de conduite automatisé est continué à la vitesse initiale et aucune demande de prise en charge de la tâche de conduite n'est émise au conducteur de véhicule, si, pendant le retard temporel prédéfini jusqu'à l'émission de la demande de prise en charge de la tâche de conduite au conducteur de véhicule, il est déterminé que les capteurs (S) de détection d'environnement présentent respectivement une portée (R) estimée suffisante pour le fonctionnement de conduite automatisé,
- s'il est déterminé que tous les capteurs (S) de détection d'environnement ou plus de capteurs de détection d'environnement ou d'autres capteurs (S) de détection d'environnement que le sous-ensemble prédéfini ne présentent respectivement pas une portée (R) estimée suffisante, le véhicule (F) continue à être déplacé en fonctionnement de conduite automatisé, dans lequel la vitesse du véhicule (F) est réduite de manière prédéfinie plus que faible, et dans lequel la demande de prise en charge de la tâche de conduite du véhicule (F) est immédiatement émise au conducteur du véhicule.

2. Procédé selon la revendication 1,
**caractérisé en ce que** la portée (R) estimée respective est évaluée comme suffisante si le véhicule (F) peut être freiné jusqu'à l'arrêt avec une décélération prédéfinie à l'intérieur de cette portée (R) estimée et/ou si la portée (R) estimée respective dépasse une portée de capteur minimale prédéfinie pour la vitesse actuelle du véhicule (F).

3. Procédé selon l'une des revendications précédentes,
**caractérisé en ce que** le fonctionnement de conduite automatisé est terminé si le conducteur de véhicule ne prend pas en charge la tâche de conduite à l'intérieur d'un intervalle de temps de prise en charge pouvant être prédéfini ou prédéfini à partir de l'émission de la demande.

4. Procédé selon l'une des revendications précédentes,
**caractérisé en ce que** la portée (R) respective des capteurs (S) de détection d'environnement du véhicule (F) qui sont prévus pour la détection d'un environnement du véhicule (F) dans la direction de conduite du véhicule (F) est estimée.

5. Procédé selon l'une des revendications précédentes,
**caractérisé en ce que** la portée (R) respective est estimée par des capteurs (S) de détection d'environnement de différents types.

6. Procédé selon l'une des revendications précédentes,
**caractérisé en ce que** la portée (R) respective d'au moins un capteur radar, d'au moins un capteur lidar et d'au moins un capteur de caméra est estimée.

7. Procédé selon l'une des revendications précédentes,
**caractérisé en ce que** la plausibilité de la portée (R) estimée respective est d'abord établie et, à l'aide de la portée (R) estimée respective dont la plausibilité a été établie, il est vérifié si les capteurs (S) de détection d'environnement présentent respectivement une portée (R) estimée suffisante pour le fonctionnement de conduite automatisé.

8. Procédé selon la revendication 7,
**caractérisé en ce que** la portée (R) estimée du capteur (S) de détection d'environnement respectif est évaluée comme non plausible si le capteur (S) de détection d'environnement ne détecte pas, pendant une période de temps prédéfinie, un objet qu'il aurait dû détecter selon sa portée (R) estimée.

9. Procédé selon la revendication 7 ou 8,
**caractérisé en ce que,** dans le cas d'une portée (R) estimée, évaluée non plausible, d'un capteur (S) de détection d'environnement, la portée (R) estimée de ce capteur (S) de détection d'environnement est corrigée à une valeur plus petite.
